# EUROPÄISCHE PATENTSCHRIFT

(11) **EP 4 227 092 B1**
(45) Veröffentlichungstag und Bekanntmachung des Hinweises auf die Patenterteilung: **09.10.2024**
(21) Anmeldenummer: 22155972.7
(22) Anmeldetag: 09.02.2022
(51) Int. Cl.: B32B 38/08, B27D 1/04, B27D 3/00, B32B 37/12, B32B 7/12, B32B 21/14

(54) **VERFAHREN ZUM HERSTELLEN EINES STABILISIERTEN FURNIERS**
METHOD FOR PRODUCING A STABILIZED VENEER
PROCÉDÉ DE FABRICATION D'UN PLACAGE STABILISÉ

(43) Veröffentlichungstag der Anmeldung: 16.08.2023
(73) Patentinhaber: Flooring Technologies Ltd., Kalkara SCM 1001 (MT)
(72) Erfinder: Stiewe, Bernd, 33039 Nieheim (DE); Hasch, Joachim, 10317 Berlin (DE); Kalwa, Norbert, 32805 Horn - Bad Meinberg (DE)
(74) Vertreter: Kalkoff & Partner Patentanwälte mbB

(56) Entgegenhaltungen:
- CA-A1- 2 734 129
- DE-C2- 4 422 449
- US-A1- 2017 120 564
- US-A1- 2019 210 330
- US-A1- 2022 016 872

## Beschreibung

Die Erfindung betrifft ein Verfahren zum Herstellen eines stabilisierten Furniers ohne eine Trägerplatte. Beim Herstellen von Produkten für die verschiedensten Anwendungen im Innenausbau, für Möbel und für Bodenbeläge werden Echtholzoberflächen als hochwertigste Variante betrachtet. Jedoch führt der Einsatz von Massivholz zu hohen Produktkosten sowie zu einer aufwändigen Produktion. Darüber hinaus ist auch die Verfügbarkeit der entsprechenden Menge der Hölzer sowie von Hölzern in dem benötigten Format häufig gering.

Um den Kunden trotzdem Produkte mit Echtholzoberfläche zur Verfügung stellen zu können, werden seit langem Furniere eingesetzt. Allerdings besteht bei Furnieren das Problem, dass sie bei Materialstärken unter einem Millimeter bei der Verarbeitung zum Brechen neigen und entsprechend schwierig zu verarbeiten sind, was gängig zu Materialverlusten und damit einhergehenden Mehrkosten führt. Ein weiteres Problem ist, dass derartige Furniere wegen ihrer geringen Dicke auch sehr empfindlich gegen mechanische Beschädigungen sind.

Diese Probleme werden umso gravierender, je großformatiger die Furniere sind. Dies hat auch damit zu tun, dass großformatige Furniere aus kleineren Furnierabschnitten zusammengesetzt sind. Diese Furnierabschnitte werden dabei typischerweise vor der Verwendung an den Schmalflächen zusammengeklebt und teilweise durch einen Leimfaden auf der Rückseite des Furnierblattes stabilisiert.

Eine Lösung des Standes der Technik zur Stabilisierung von Furnieren besteht darin, das gerade geschnittene Furnier unmittelbar auf eine Trägerplatte als Teil eines Möbelstücks aufzukleben. Aus der US 2017 / 120 564 A1 ist beispielsweise ein Boden-, Wand- oder Deckenpaneel bestehend aus einer Basis aus Holzwerkstoff und einer oberen Furnierschicht bekannt. Die Basis und das Furnier sind mit einer dazwischenliegenden Harzschicht heiß miteinander verpresst, wobei beim Pressvorgang Poren, Risse und/oder Lücken im Furnier mit Harz gefüllt werden sowie das Furnier mit Harz gesättigt wird, sodass das Harz nach dem Pressvorgang auf der Oberfläche des Furniers sichtbar ist.

Die US 2019 / 210 330 A1 offenbart ein Verfahren zum Herstellen eines furnierten Elements, wobei das Verfahren das Aufbringen einer ersten Schicht auf ein Substrat, das Aufbringen einer zweiten Schicht auf eine Furnierschicht sowie das Aufbringen der Furnierschicht mit der darauf aufgebrachten zweiten Schicht auf die erste Schicht umfasst. Anschließend werden das Substrat und das beschichtete Furnier derart aneinander angeordnet und verpresst, dass dabei die erste aufgebrachte Schicht und die zweite aufgebrachte Schicht aufeinander liegen. Beim Verpressen dringt dabei das von der zweiten Schicht stammende Material in die Furnierschicht ein, sodass nach dem Verpressen die erste Schicht auf der Oberfläche durch einen Riss, einen Hohlraum, ein Loch und/oder ein Astloch der Furnierschicht sichtbar wird.

Die US 2022 / 016 872 A1 betrifft ein Verfahren zum Herstellen eines Holzwerkstoffs mit einer Trägerplatte und mindestens einem ersten, nicht-außenliegenden Furnier und einem zweiten Furnier auf einer ersten Oberfläche der Trägerplatte. Dabei sind die Trägerplatte, das erste und das mindestens zweite Furnier miteinander durch Kunstharz verbunden.

Eine bekannte Lösung des Standes der Technik, die Verarbeitbarkeit eines großformatigen Furnierblattes zu verbessern, ist, auf der Rückseite eine Stabilisierungsschicht aufzukleben, wie es beispielsweise in der EP 1911 580 A1 beschrieben wird. Jedoch wird dadurch die Beständigkeit des Furniers gegenüber punktuellen Druckbeanspruchungen bei der Verarbeitung oder auch in der späteren Nutzung nach wie vor nicht verbessert, da der Klebstoff nicht in die Furnierlage eindringt. Grundsätzlich besteht zudem auch weiterhin das Problem, dass dünne großformatige Furnierblätter schwierig zu manipulieren sind, ohne dass Beschädigungen auftreten. Solche Beschädigungen, beispielsweise bei der Produktion und Verarbeitung, können lediglich durch teure technische Lösungen vermieden werden und selbst dann besteht noch eine hohe Ausschussrate, die die Produktionskosten und letztendlich den Produktpreis deutlich erhöht.

Eine andere Lösung des Standes der Technik zur Verbesserung der Stabilität und insbesondere der Beständigkeit gegen mechanische Beanspruchungen ist das Aufbringen einer dicken Lackschicht der Furnieroberfläche. Jedoch werden vom Kunden Oberflächen gefordert, deren Holzanmutung möglichst nicht verändert ist, sodass das Furnier allenfalls mit geringen Mengen an Lack oder Öl oberflächenbehandelt werden kann. Hierdurch wird zwar ein Schutz gegenüber Verschmutzung und Verbleichen, nicht aber gegenüber Druckbeanspruchungen erreicht. Dies ist jedoch besonders bei Fußböden und anderen mechanisch hoch belasteten Oberflächen ein großes Problem, was gegenwärtig im Stand der Technik nur dadurch gelöst werden kann, dass mit höheren Furnierstärken gearbeitet wird.

Der Erfindung liegt daher die technische Aufgabe zu Grunde, ein Verfahren zum Herstellen eines Furniers sowie ein Furnier bereitzustellen, wobei das Furnier ohne eine Trägerplatte besonders stabil ist und insbesondere eine besonders hohe mechanische Stabilität gegenüber Druckbelastungen besitzt, als Zwischenprodukt leicht und sicher verarbeitet werden kann, eine besonders geringe Furnierstärke aufweist und somit besonders günstig herzustellen ist sowie nach wie vor eine gute Echtholzoptik und -haptik aufweist.

Die Aufgabe wird erfindungsgemäß durch ein Verfahren zum Herstellen eines stabilisierten Furniers gemäß Anspruch 1.

Vorteilhafte Weiterbildungen der Erfindung sind in den abhängigen Ansprüchen angegeben.

Das erfindungsgemäße Verfahren zum Herstellen eines stabilisierten und/oder eines aufrollbaren Furniers ohne eine Trägerplatte und/oder als ein eigenständiges Produkt weist als Verfahrensschritte zunächst ein Bereitstellen einer Stabilisierungslage, gefolgt von einem einseitigen Beschichten, insbesondere einer Oberseite, der Stabilisierungslage mit einem Kondensationsharz, sowie nachfolgend einem Pressen der Stabilisierungslage und der Furnierlage zum Bilden einer Stabilisierungsschicht mittels des Kondensationsharzes auf, wobei das Kondensationsharz beim Verpressen aus der Stabilisierungslage wenigstens teilweise in die Furnierlage gepresst wird und dort zu einer Verfestigung bzw. mechanischen Stabilisierung des Furniers führt.

Weiterhin betrifft die Offenbarung, jedoch außerhalb des Schutzumfangs der Ansprüche, ein stabilisiertes Furnier ohne eine Trägerplatte und/oder als ein eigenständiges Produkt, insbesondere hergestellt nach dem erfindungsgemäßen Verfahren, das eine auf einer Rückseite der Furnierlage verpressten Stabilisierungslage sowie eine sich kontinuierlich von der Stabilisierungslage in die Rückseite der Furnierlage hinein erstreckende Stabilisierungsschicht aus einem aus der Stabilisierungslage in die Furnierlage eingepressten Kondensationsharz aufweist.

Schließlich betrifft die Offenbarung, jedoch ebenfalls außerhalb des Schutzumfangs der Ansprüche, eine furnierte Platte, aufweisend eine Trägerplatte und ein oberhalb der Trägerplatte angeordnetes, erfindungsgemäßes, stabilisiertes Furnier. Die Erfinder haben erkannt, dass durch das Einbringen eines Kondensationsharzes in die Rückseite der Furnierlage mittels einer Stabilisierungslage eine mechanische Stabilisierung des Furniers, insbesondere auch gegen Druckbeanspruchungen, erreicht werden kann und zudem durch die Verwendung einer Stabilisierungslage in Kombination mit dem gezielten Einbringen des Kondensationsharzes eine sich über die Stabilisierungslage in die Furnierlage erstreckende Stabilisierungsschicht gebildet werden kann, die zu einer deutlichen Verbesserung der mechanischen Eigenschaften sowie der Verarbeitbarkeit des isolierten Furniers führt. Dadurch ist es möglich, eine besonders dünne Furnierlage zu verwenden und somit die Produktions- und Produktkosten des stabilisierten Furniers gering zu halten. Erfindungsgemäß bleibt die Vorderseite und somit die Holzoberfläche des stabilisierten Furniers durch das Einpressen des Kondensationsharzes von der Rückseite her in die Furnierlage unverändert und natürlich, sodass eine unveränderte Holzoberflächenoptik und -haptik erzielt wird. Zudem wird durch die erfindungsgemäße Lösung die Variabilität der Verarbeitung gesteigert, da das stabilisierte Furnier typischerweise aufrollbar ist und entsprechend als Rollenware gelagert, eingesetzt und weiterverarbeitet werden kann.

Bei dem offenbarten stabilisierten Furnier handelt es sich entsprechend um einen Schichtwerkstoff bzw. einen Verbundwerkstoff, der aus wenigstens zwei Lagen, der Furnierlage und der Stabilisierungslage gebildet ist. Dabei sind diese beiden Lagen im fertigen Furnier bevorzugt untrennbar miteinander verbunden. Erfindungsgemäß erfolgt das Herstellen des offenbarten Furniers ohne eine Trägerplatte und/oder als ein eigenständiges Produkt und entsprechend bevorzugt zudem unabhängig von einem nachfolgenden Festlegen auf einer beliebigen Oberfläche. Das offenbarte, stabilisierte

Furnier ist also ein eigenständiges Produkt, das einzeln hergestellt wird und unabhängig von einem Träger oder einer Trägerplatte gelagert und gehandhabt werden kann und insbesondere nicht unmittelbar durch eine Trägerplatte stabilisiert werden muss. Dies stellt einen bedeutenden Vorteil der Erfindung dar, da bisher entsprechende mit einer Stabilisierungslage verbundene Furniere zeitgleich auch immer mit einer Trägerplatte verbunden wurden und somit das Furnier als eigenständiges Produkt für weitere Anwendungen nicht zur Verfügung stand.

Die Stabilisierungslage erstreckt sich bevorzugt über die gesamte Fläche des stabilisierten Furniers und/oder weist über die gesamte Fläche eine im Wesentlichen gleichbleibende Dicke auf. Weiterhin bevorzugt weist die Stabilisierungslage über die gesamte Fläche eine gleichbleibende Zusammensetzung und/oder die gleichen mechanischen Eigenschaften auf. Ebenfalls bevorzugt ist die Stabilisierungslage biegbar, aufrollbar und/oder flexibel.

Dabei ist die Stabilisierungslage zum einseitigen Beschichten mit einem Kondensationsharz vorgesehen, wobei die Stabilisierungslage bevorzugt derart gebildet ist, dass das auf der Oberfläche der Stabilisierungslage aufgebrauchte Kondensationsharz zumindest teilweise in die Stabilisierungslage eindringen kann. Das einseitige Beschichten kann dabei in beliebiger Weise erfolgen. Möglich ist ein Auftrag des Kondensationsharzes unmittelbar vor der weiteren Verwendung oder aber ein Auftrag und nachfolgendes Durchtränken der Stabilisierungslage. Das Beschichten kann dabei sowohl mittels eines flüssigen Kondensationsharzes, als auch durch ein beliebiges Aufbringen eines Feststoffes erfolgen.

Alternativ kann die Stabilisierungslage jedoch auch derart gebildet sein, dass kaum oder kein Kondensationsharz eindringen kann, sodass es sich bevorzugt beim Beschichten um einen ausschließlich oberflächlichen Auftrag des Kondensationsharz handelt und besonders bevorzugt auch nachfolgend das Kondensationsharz nicht in die Stabilisierungslage eindringt und/oder diese durchtränken kann. Obwohl dazu eine beliebige entsprechend flüssigkeitsfeste bzw. flüssigkeitsundurchlässige Stabilisierungslage verwendet werden kann, ist das Verwenden von Pergamentpapier zu diesem Zweck besonders bevorzugt. Eine ebenfalls besonders bevorzugte Ausführung sieht weiterhin vor, dass als Stabilisierungslage ein Bioverbundwerkstoff auf Basis von Zellstoff und insbesondere Vulkanfiber bzw. Vulkament verwendet wird. Dadurch wird in vorteilhafter Weise ein Bioverbundwerkstoff mit einer Furnierlage, insbesondere mit einer Echtholzfurnieroberfläche erhalten.

Bevorzugt erfolgt das Beschichten jedoch als Flüssigbeschichtung, insbesondere unmittelbar auf die Oberfläche der Stabilisierungslage. Weiterhin ist bevorzugt, dass die Rückseite der Stabilisierungslage, d.h. die der Furnierlage abgewandte Oberfläche der Stabilisierungslage, während der Herstellung des stabilisierten Furniers und/oder bei dem stabilisierten Furnier keine Beschichtung mit Kondensationsharz und/oder keine außenliegende, ausschließlich aus Kondensationsharz gebildete Schicht aufweist. Entsprechend sieht eine bevorzugte Ausgestaltung des erfindungsgemäßen Verfahrens vor, dass eine der beschichteten Seite gegenüberliegende Seite der Stabilisierungslage frei von einer Beschichtung mit dem Kondensationsharz ist. Ebenso ist bevorzugt die Unterseite der Stabilisierungslage wenigstens vor dem und/oder bei dem Pressen mit keinem Kunstharz und/oder mit keinem Klebstoff versehen.

Erfindungsgemäß wird die Stabilisierungslage auf einer Rückseite einer Furnierlage angeordnet und damit verpresst. Die Rückseite einer Furnierlage ist dabei bevorzugt die Seite der Furnierlage, die der Oberfläche des fertigen, stabilisierten Furniers gegenüberliegt. Entsprechend ist die Vorderseite der Furnierlage vorgesehen, die Oberfläche des stabilisierten Furniers zu bilden und/oder sichtbar zu bleiben. Als Furnierlage wird dabei bevorzugt eine Lage aus Echtholz verwendet, die grundsätzlich zunächst eine beliebige Dicke aufweisen kann, wobei für Furniere allgemein Dicken zwischen 0,5 mm und 10 mm gängig sind. Aufgrund der Stabilisierung mit dem Kondensationsharz sindjedoch deutlich geringere Schichtdicken möglich. Das Furnier kann einstückig von einem Stamm durch Messern oder Schälen hergestellt sein. Es kann aber auch aus einzelnen Stücken zusammengesetzt sein, die z. B. durch Bindemittel oder sogenannte Leimfäden miteinander verbunden sind. Das Furnier weist bevorzugt im Wesentlichen die Abmessungen der Stabilisierungslage auf.

Das Verbinden der Stabilisierungslage und der Furnierlage zum Herstellen des stabilisierten Furniers erfolgt dabei erfindungsgemäß durch Pressen, wobei das Pressen grundsätzlich statisch oder dynamisch erfolgen kann. In jedem Fall führt das Pressen erfindungsgemäß dazu, dass wenigstens ein Teil des Kondensationsharzes aus der Stabilisierungslage bzw. von der Oberfläche der Stabilisierungslage in die Furnierlage eingepresst wird. Dies erfolgt bevorzugt dadurch, dass das Kunstharz in der Presse unter Einwirkung von erhöhter Temperatur und erhöhtem Druck verflüssigt wird und es nachfolgend chemisch aushärtet und/oder beim Abkühlen erstarrt. Die Presszeit beträgt typischerweise zwischen 20 Sekunden und 60 Sekunden. Bevorzugt weist die Furnierlage Hohlräume auf, insbesondere herstellungsbedingte Risse bzw. Spalten und/oder holztypische Hohlräume, z. B. durch angeschnittene Gefäße. In wenigstens einen Teil dieser Hohlräume dringt dann bevorzugt beim Pressen das Kondensationsharz ein.

Das in die Furnierlage eindringende Kondensationsharz führt erfindungsgemäß zum Bilden einer Stabilisierungsschicht, die sich durch die Stabilisierungslage hindurch in die Furnierlage hinein erstreckt und dabei sowohl die Stabilisierungslage mit der Furnierlage verbindet, als auch mit dem Material der Furnierlage einen Verbundwerkstoff, insbesondere einen Durchdringungsverbundwerkstoff, bildet, der gegenüber reinem Holz verbesserte Materialeigenschaften, beispielsweise eine erhöhte Elastizität bzw. Flexibilität und/oder eine erhöhte mechanische Festigkeit und insbesondere eine erhöhte Druckbelastbarkeit aufweist.

Zum Bilden einer furnierten Platte ist schließlich erfindungsgemäß vorgesehen, ein stabilisiertes offenbartes Furnier auf einer Trägerplatte anzuordnen und bevorzugt damit zu verkleben bzw. mittels eines Klebstoffs oder Kunstharzes zu verbinden. Als Trägerplatte kann grundsätzlich jede auf mindestens einer Seite ebene Platte verwendet werden, die mit einem Klebstoff oder einem Kunstharz eine feste Verbindung eingeht. Vorzugsweise werden Holzwerkstoffplatten eingesetzt, z. B. mitteldichte oder hochdichte Faserplatten (MDF, HDF), Spanplatten, OSB (Oriented Strand Boards), Massivholzplatten, Sperrholz sowie Stab- oder Stäbchenplatten, aber auch zementgebundene Spanplatten oder Faserplatten, einschließlich Faserplatten mit hohem Bindemittelanteil, sowie Bio-Compositplatten und wasserfeste Platten sind geeignet. Wasserfeste Platten sind Platten, auch Holzwerkstoffplatten, die sich unter Einwirkung von Wasser kaum oder gar nicht verformen, die insbesondere nicht oder kaum quellen. Die Trägerplatte weist eine Oberseite auf, auf der bevorzugt das Furnier aufgebracht wird und eine Unterseite. Grundsätzlich ist denkbar, dass wenigstens zwei Oberflächen und besonders bevorzugt zwei sich gegenüberliegende Oberflächen und insbesondere bevorzugt die Ober- und Unterseite der Platte ein darauf angeordnetes, stabilisiertes Furnier aufweisen. Weiterhin ist bevorzugt, dass die furnierte Platte an der Unterseite und/oder einem Furnier gegenüberliegend ein Gegenzug aufweist, wobei dieser Gegenzug ebenfalls durch ein Furnier bzw. eine Furnierlage und insbesondere durch ein offenbartes stabilisiertes Furnier gebildet sein kann. Der Gegenzug soll die Zugkräfte kompensieren, die durch das Schrumpfen des Kunstharzes bei der Aushärtung des Klebstoffes oder des Kunstharzes auf der Oberseite der Trägerplatte ausgelöst werden. Der Gegenzug kann dabei beispielsweise ein kunstharzgetränktes Papier oder eine kunstharzgetränkte Pappe sein.

Das Kondensationsharz kann grundsätzlich ein beliebiges Kunstharz sein und wird dabei als Bindemittel verwendet. Das Kondensationsharz ist vorzugsweise ein duroplastisches Harz, insbesondere ein aminoplastisches oder phenolbasiertes Harz. Typisch werden Melaminharz, Phenolharz, Harnstoffharz oder Mischungen dieser Harze eingesetzt. Besonders bevorzugt wird als Kondensationsharz ein Melamin-Formaldehyd-, ein Harnstoff-Formaldehyd- und/oder ein Phenol-Formaldehyd-Harz oder Mischungen mehrerer dieser Harze eingesetzt. Das Kondensationsharz wird bevorzugt als wässrige Lösung mit einem Feststoffgehalt von 50 Gew.-% bis 60 Gew.-% eingesetzt, wobei der Feststoffgehalt besonders bevorzugt mit dem Gehalt an Kunstharz bzw. Kondensationsharz gleichzusetzen ist. Ebenfalls bevorzugt wird das Kondensationsharz bzw. das Kunstharz in einer Menge eingesetzt, die gewährleistet, dass das Kunstharz das Furnier mindestens abschnittsweise durchdringt. Ebenfalls bevorzugt erfolgt der Harzauftrag in einem Schritt bzw. als Auftrag genau eines Kondensationsharzes oder eines Harzgemisches.

Bei einer bevorzugten Weiterbildung des erfindungsgemäßen Verfahrens ist das Kondensationsharz ein Postformingharz und/oder ist mittels wenigstens eines Elastifizierungsmittels derart flexibel eingestellt, dass das stabilisierte Furnier nach dem Pressen zu einer Rolle aufgerollt werden kann. Flexibilisierungsmittel, die dabei zum Einsatz kommen können, sind unter anderem Diole, Caprolactam, Guanidinderivate und Zucker. Je nach benötigtem Flexibilisierungsgrad werden sie den Kondensationsharzen bevorzugt bezogen auf die Masse des Kondensationsharzes von 2 % bis 15 % und besonders bevorzugt von 5 % bis 10 % zugesetzt. Dabei besteht die Möglichkeit, das Flexibilisierungsmittel bereits bei der Kondensationsharzherstellung oder nachträglich dem fertigen Kondensationsharz zuzusetzen. Weiterhin erfolgt bevorzugt nach dem Pressen bzw. nach dem Herstellen des stabilisierten Furniers ein Aufrollen des fertigen Furniers zum Bilden einer Rolle und/oder zur Weiterverarbeitung als Rollenware.

Weiterhin ist bevorzugt, dass das Kondensationsharz wenigstens ein Additiv, insbesondere aus der Gruppe Härter, Netzmittel, Farbstoff, Pigment, Effektpigment, Flammschutzmittel, Tinte, UV-Stabilisator, Infrarotabsorber, Mittel zur Erhöhung der Leitfähigkeit, antibakterielle Mittel, Hydrophobierungsmittel, Bleichmittel und/oder Beize aufweist. Besonders bevorzugt wird eine Mischung von zwei oder mehr Additiven verwendet. Dabei können wenigstens ein Additiv, ein Teil der Additive oder alle Additive gemeinsam mit dem Kondensationsharz auf die Stabilisierungslage aufgebracht und/oder in das Furnier eingebracht werden. Zudem ist aber auch denkbar, wenigstens ein Additiv, ein Teil der Additive oder alle Additive getrennt auf das Kondensationsharz, auf die Oberfläche der Stabilisierungslage und/oder auf die Rückseite der Furnierlage, insbesondere vor dem Pressen, aufzutragen.

Jedes Additiv kann sowohl als partikelförmiger Feststoff als auch in flüssiger Form aufgetragen und/oder dem Kondensationsharz zugeführt werden. Das Additiv kann auch als Granulat vorliegen. Alternativ kann ein flüssiges oder pastöses Additiv eingesetzt werden. Zudem kann jedes Additiv vollständig in dem Kondensationsharz löslich sein, wobei jedoch bevorzugt wird, dass wenigstens ein Additiv nicht in dem Bindemittel löslich oder nicht homogen in dem Bindemittel löslich ist. Insbesondere ist es vorteilhaft, ein nicht lösliches Additiv auf der Oberfläche der beschichteten Stabilisierungslage und/oder zwischen der Stabilisierungslage und der Furnierlage anzuordnen, sodass es während des Pressvorgangs mindestens abschnittsweise durch die Furnierlage getragen oder gedrückt wird, wodurch das Additiv gezielt im Furnier verteilt wird. Damit wird zum einen ein besonders sparsamer Einsatz des Additivs ermöglicht. Zum anderen gelangt so eine höhere Konzentration des Additivs gezielt in das Furnier bzw. an die Furnieroberfläche, sodass der Effekt des jeweiligen Additivs besser gewährleistet ist.

Ein bedeutender Vorteil des erfindungsgemäßen Verfahrens ist es, dass eine Furnierlage in einer besonders geringen Materialstärke eingesetzt werden kann und dann derart stabilisiert wird, dass die mechanischen Eigenschaften wenigstens mit denen einer Furnierlage deutlich größerer Materialstärke vergleichbar sind. Entsprechend sieht eine bevorzugte Ausgestaltung des erfindungsgemäßen Verfahrens vor, dass die Furnierlage eine Stärke von kleiner oder gleich 1 mm, bevorzugt zwischen 0,01 mm und 1 mm, besonders bevorzugt zwischen 0,1 mm und 1 mm, ganz besonders bevorzugt zwischen 0,2 mm und 0,5 mm und insbesondere kleiner als 0,3 mm aufweist.

Allgemein sind Furnierlagen und Furniere mit einer solch geringen Stärke sehr empfindlich gegen mechanische Beschädigungen und sind zudem sehr schwer zu handhaben. Insbesondere ist es nicht möglich, solche Furniere zu rollen bzw. als Rollenware einzusetzen. Jedoch wird eine Furnierlage einer solchen geringen Stärke durch die erzeugte Stabilisierungsschicht erst ausreichend mechanisch stabil, sodass auch eine Nutzung mit höheren Anforderungen an die mechanischen Eigenschaften in Frage kommt. Schließlich ermöglicht eine geeignete Stabilisierung ein Aufrollen des hergestellten Furniers trotz der geringen Materialstärke und/oder eine besonders fehlerfreie und einfache Weiterverarbeitung.

Gemäß einer besonders bevorzugten Ausgestaltung des erfindungsgemäßen Verfahrens erfolgt das Pressen mittels einer Doppelbandpresse bzw. mittels einer CPL-Presse, wodurch einerseits in einfacher Weise ein Aufbau des stabilisierten Furniers mit mehreren Schichten erzeugt werden kann und andererseits eine kontinuierliche Herstellung von stabilisiertem Furnier möglich ist. Insbesondere ermöglicht es die Verwendung einer Doppelbandpresse bzw. generell ein dynamisches Pressen, das stabilisierte Furnier als Rollenware herzustellen und/oder lange Abschnitte des hergestellten Furniers nach dessen Herstellung aufzurollen. Insbesondere kann so ein Endlosmaterial erzeugt werden, das auch in Industrien eingesetzt werden kann, in denen die Verarbeitung von Rollenware üblich ist. Alternativ kann das Pressen jedoch auch mittels einer statischen Presse, insbesondere einer Kurztakt- und/oder Mehretagenpresse, erfolgen.

Um das Einpressen von Kondensationsharz in die Furnierlage zu ermöglichen, erfolgt das Pressen bevorzugt bei einer erhöhten Temperatur sowie unter Druck. Erfindungsgemäß ist vorgesehen, dass das Pressen bei einem Druck zwischen 2 MPa (20 bar) und 3 MPa (30 bar) erfolgt. Eine vorteilhafte Weiterbildung des erfindungsgemäßen Verfahrens sieht vor, dass das Pressen bei einer Temperatur zwischen 120°C und 250°C, bevorzugt zwischen 150°C und 220°C, besonders bevorzugt zwischen 160°C und 200°C und insbesondere bevorzugt zwischen 170°C und 190°C erfolgt. Insbesondere bevorzugt erfolgt das Pressen bei 180°C und bei einem Druck von 2,5 MPa (25 bar), ggf. jeweils mit einer Abweichung von maximal 10 %, da hier einerseits ein ausreichend tiefes Eindringen des Kondensationsharzes in die Furnierlage erreicht wird und andererseits ein vollständiges Durchdringen des Kondensationsharzes durch die Furnierlage verhindert werden kann, was zu einer unerwünschten Oberflächenoptik und/oder -haptik des stabilisierten Furniers führen würde.

Obwohl die Stabilisierungslage aus einem beliebigen Material gebildet sein und eine beliebige Dicke aufweisen kann, ist es bevorzugt, dass als Stabilisierungslage ein Pergament, ein Papier, ein Vlies, ein Vulkament oder eine anderweitige Faserlage eingesetzt wird und/oder die Grammatur der Stabilisierungslage zwischen 15 g/m² und 500 g/m², bevorzugt zwischen 25 g/m² und 300 g/m², besonders bevorzugt zwischen 50 g/m² und 250 g/m² und ganz besonders bevorzugt zwischen 50 g/m² und 150 g/m², insbesondere bei einer Verwendung von Pergamentpapier als Stabilisierungslage, beträgt.

Um das Eindringen des Kondensationsharzes in die Furnierlage besser steuern zu können, kann ein Kondensationsharz mit definierter Viskosität eingesetzt werden. Zudem ist ein definierter Wassergehalt sehr vorteilhaft, wobei der Einsatz eines Kondensationsharzes mit einem Wassermassengehalt zwischen 4 % und 7 % bevorzugt und zwischen 5 % und 6 % insbesondere bevorzugt ist. Zusätzlich oder alternativ ist jedoch auch denkbar, die Beschichtung der Stabilisierungslage mit dem Kondensationsharz vor dem Anordnen der Stabilisierungslage auf der Rückseite der Furnierlage auf eine Restfeuchte von unter 10 %, bevorzugt unter 8 %, besonders bevorzugt unter 7,5 % und ganz besonders bevorzugt unter 6 % zu trocknen, um vor dem Pressen einen vordefinierten Zustand zu erhalten und so mittels des Verfahrens ein besonders gut wiederholbares bzw. steuerbares Eindringen des Kondensationsharzes in die Furnierlage zu erreichen. Dabei beträgt die Restfeuchte besonders bevorzugt wenigstens 5 %. Soweit nicht anders angegeben, beziehen sich alle Prozentangaben grundsätzlich auf die Masse.

Natürlich ist es auch möglich, eine Stabilisierungslage beidseitig mit einem Harz zu imprägnieren und dann beidseitig ein Furnier aufzubringen. Durch den symmetrischen Aufbau werden verzugsfreie Produkte erzeugt. Diese können mit und ohne Oberflächenveredelung z. B. als dünne beidseitig nutzbare Dekorationsartikel verwendet werden. Dabei ist wiederum die hohe mechanische Stabilität von Nutzen.

Eine weitergehende optische und/oder haptische Ausgestaltung des erhaltenen stabilisierten Furniers kann bei einer vorteilhaften Weiterbildung des erfindungsgemäßen Verfahrens dadurch erreicht werden, dass beim Pressen ein Dekorfilm, ein Hochglanz-Dekorfilm und/oder ein Strukturgeber, insbesondere zum Erzeugen unterschiedlicher Glanzgrade und/oder ein Transferpapier zum Übertragen von Drucken auf das Furnier auf der Furnierlage und insbesondere auf der Vorderseite bzw. Oberfläche der Furnierlage angeordnet wird.

Schließlich sieht eine bevorzugte Ausgestaltung der furnierten Platte vor, dass das Verbinden des stabilisierten Furniers und der Trägerplatte mittels eines vom Kondensationsharz zum Herstellen des stabilisierten Furniers abweichenden Klebstoffs oder Harzes, insbesondere einem PU-Klebstoff oder einem PU-Heißklebstoff, und/oder in einem separaten Klebe- und/oder Pressvorgang erfolgt. Insbesondere bevorzugt erfolgt das Verbinden des stabilisierten Furniers und der Trägerplatte durch Aufkaschieren des Furniers.

Mehrere Ausführungsbeispiele eines erfindungsgemäßen Verfahrens zum Herstellen eines stabilisierten Furniers werden nachfolgend näher beschrieben:

### Ausführungsbeispiel 1:

Bei einer ersten Ausführung eines Verfahrens zum Herstellen eines stabilisierten Furniers wird zunächst ein Pergament mit einer Grammatur von 50 g/m² in einem Imprägnierkanal einseitig mit einem Melaminharz beschichtet. Die Auftragsmenge beträgt dabei bei 100 g Harz /m² fl.

Das Melaminharz weist dabei einen Feststoffgehalt von 55 Gew% auf. Weiterhin ist das Melaminharz ein sogenanntes Postformingharz, d. h. ein Harz, das mit Hilfe eines Elastifizierungsmittels besonders flexibel eingestellt ist, sodass das stabilisierte Furnier biegbar und insbesondere aufrollbar ist. Dem Harz sind zudem übliche Hilfsstoffe wie Härter, Netzmittel etc. hinzugefügt, die jedoch für die grundsätzlichen Eigenschaften zur Durchführung des Verfahrens nicht wesentlich sind.

Das auf das Pergament aufgetragene Harz wird optional anschließend im Imprägnierkanal auf eine Restfeuchte von ca. 6 Gew% getrocknet. Am Ende des Imprägnierkanals wird das Pergament aufgerollt. Die Rolle mit dem Pergament wird dann an einer CPL-Presse bzw. einer Doppelbandpresse mit der beharzten Seite nach oben eingespannt und abgewickelt. Auf das Pergament wird dann von einer weiteren Rolle ein Eichenfurnier mit einer Materialstärke von 0,6 mm vorsichtig abgelegt, um eine Beschädigung der Furnierlage zu vermeiden. Die Abrollgeschwindigkeit liegt dabei bei 10 m/min. Die CPL-Presse wird bei einer Temperatur von 180 °C und einem Druck von 2,5 MPa (25 bar) betrieben. Hinter der Presse wird der verpresste Aufbau des stabilisierten Furniers zu einer Furnierrolle aufgerollt, die ohne eine Beschädigung des Furniers leicht handhabbar ist. Alternativ kann das stabilisierte Furnier auch beliebig auf Format geschnitten werden.

Im Gegensatz zu einem Furnierblatt ohne eine Stabilisierung durch eine Rückseitenbeschichtung kann dieses auch in besonders großen Abmessungen, beispielsweise von 5600 x 2070 mm ohne Beschädigungen manipuliert werden.

Um die mechanische Stabilität und insbesondere die Druckbelastbarkeit des stabilisierten Furniers zu prüfen, wird das mit der Rückseitenbeschichtung versehene Furnier anschließend auf einer Kaschierpresse auf eine HDF mit einer Stärke von 8 mm aufkaschiert. Als Klebstoff wird dabei ein PU-Hotmelt mit einer Klebstoffmenge von 100 g/m² eingesetzt. Zu Vergleichszwecken wurde ein Eichenfurnier ohne Rückseitenbeschichtung ebenfalls entsprechend auf eine HDF aufkaschiert. Anschließend wurde bei beiden Platten ein Kugelfalltest (DIN EN 13329: 2016-08, große Kugel) durchgeführt. Bei der Platte mit dem Furnier ohne Rückseitenbeschichtung wurde eine Fallhöhe von 750 mm bestimmt. Bei der Platte mit dem stabilisierten Furnier mit der Rückseitenbeschichtung wurde dagegen ein deutlich höherer Wert von 1600 mm erreicht, was die mechanische Stabilisierung des Furniers eindrucksvoll dokumentiert.

### Ausführungsbeispiel 2:

Bei einer zweiten Ausführung eines Verfahrens zum Herstellen eines stabilisierten Furniers wird ein Overlay mit einer Grammatur von 25 g/m² in einem Imprägnierkanal mit einem Melaminharz imprägniert. Die Auftragsmenge beträgt 180 g/m² fl. Und der Feststoffgehalt 55 Gew%.

Das Melaminharz ist abermals ein Postformingharz, d. h. ein Harz, das mit Hilfe von einem Elastifizierungsmittel besonders flexibel eingestellt ist, sodass das stabilisierte Furnier biegbar und insbesondere aufrollbar ist. Dem Harz sind zudem übliche Hilfsstoffe wie Härter, Netzmittel etc. hinzugefügt, die jedoch für die grundsätzlichen Eigenschaften zur Durchführung des Verfahrens nicht wesentlich sind.

Das Overlay wird im Imprägnierkanal auf eine Restfeuchte von ca. 6 Gew% getrocknet. Am Ende des Kanals wird das Overlay aufgerollt. Die Rolle mit dem Overlay wird dann erneut an einer CPL-Presse eingespannt und abgewickelt. Auch auf das Overlay wird nachfolgend von einer weiteren Rolle ein Eichenfurnier mit einer Materialstärke von 0,6 mm abgelegt. Auf der Unterseite des Overlays wird diesmal ein Trennpapier mitlaufen gelassen. Die Abrollgeschwindigkeit liegt bei 10 m/min. Die CPL-Presse wird bei einer Temperatur von 180 °C und einem Druck von 2,5 MPa (25 bar) betrieben.

Durch Variationsversuche der Pressparameter konnte das Aufsteigen des Melaminharzes mittels der Temperatur und des Druckes so gesteuert werden, dass eine möglichst gute Durchimprägnierung des Furniers erreicht wird, ohne dass das Harz auf der Oberseite des Furniers sichtbar wird. Hinter der Presse wird der verpresste Aufbau des stabilisierten Furniers entweder aufgerollt oder auf Format geschnitten.

Abermals wurde ein Kugelfalltest durchgeführt, der eine signifikante Verbesserung der mechanischen Eigenschaften des stabilisierten Furniers zeigte.

### Ausführungsbeispiel 3:

Bei einer dritten Ausführung des erfindungsgemäßen Verfahrens wird zum Herstellen eines besonders dünnen stabilisierten Furniers zunächst ein Glasvlies mit einer Grammatur von 30 g/m² in einem Imprägnierkanal mit einem Gemisch aus Harnstoff- und Melaminharz imprägniert. Die Auftragsmenge beträgt bei 60 g/m² fl. bei einem Feststoffgehalt von 55 Gew%.

Bei dem Melaminharz handelt es sich wieder um ein Postformingharz, das mit Hilfe eines Elastifizierungsmittels besonders flexibel eingestellt war. Das Glasvlies wird dann im Imprägnierkanal auf eine Restfeuchte von etwa 6 Gew% getrocknet. Am Ende des Kanals wird das imprägnierte Vlies aufgerollt.

Die Rolle mit dem Vlies wird dann an einer CPL-Presse eingespannt und abgewickelt. Auf dem Vlies wird dann von einer weiteren Rolle ein Eichenfurnier mit einer Materialstärke von 0,3 mm abgelegt. Auf der Unterseite des Vlieses läuft dabei ein Trennpapier mit. Die Abrollgeschwindigkeit liegt wieder bei 10 m/min. Die CPL-Presse wird bei einer Temperatur von 180 °C und einem Druck von 2,5 MPa (25 bar) betrieben. Durch eine Variation der Pressparameter konnte das Aufsteigen des Melaminharzes so gesteuert werden, dass eine möglichst gute Durchimprägnierung des Furniers erreicht wurde, ohne dass das Harz auf der Oberseite des Furniers sichtbar war. Hinter der Presse wird der verpresste Aufbau des stabilisierten Furniers entweder aufgerollt oder auf Format geschnitten. Auch hier konnte mittels eines Kugelfalltests eine Verbesserung der mechanischen Eigenschaften gezeigt werden.

### Ausführungsbeispiel 4:

Eine vierte Ausführung des erfindungsgemäßen Verfahrens zum Herstellen eines besonders dünnen stabilisierten Furniers unterscheidet sich von der vorausgegangenen Ausführung lediglich dadurch, dass eine Stabilisierungslage aus Vulkanfiber mit der Bezeichnung Vulkament verwendet wird, um einen Bioverbundwerkstoff mit einer Oberfläche aus einem Echtholzfurnier, insbesondere einem Eichenfurnier, zu erhalten. Auch in diesem Fall zeigt ein Kugelfalltest eine deutliche Verbesserung der mechanischen Eigenschaften.

## Patentansprüche

1. Verfahren zum Herstellen eines stabilisierten Furniers ohne eine Trägerplatte, mit den Schritten:
- Bereitstellen einer Stabilisierungslage,
- einseitiges Beschichten der Stabilisierungslage mit einem Kondensationsharz,
- Anordnen der Stabilisierungslage mit der Beschichtung auf der Rückseite einer Furnierlage,
- Pressen der Stabilisierungslage und der Furnierlage mit einem Druck zwischen 2 MPa und 3 MPa zum Bilden einer Stabilisierungsschicht, wobei
- das Kondensationsharz beim Verpressen aus der Stabilisierungslage wenigstens teilweise in die Furnierlage gepresst wird und dort zu einer mechanischen Stabilisierung des Furniers führt und wobei
- die Holzoberfläche auf der Vorderseite des stabilisierten Furniers durch das Einpressen des Kondensationsharzes von der Rückseite her in die Furnierlage unverändert und natürlich bleibt, sodass eine unveränderte Holzoberflächenoptik und -haptik des stabilisierten Furniers erzielt wird.

2. Verfahren nach Anspruch 1, **dadurch gekennzeichnet, dass** eine der beschichteten Seite gegenüberliegenden Seite der Stabilisierungslage frei von einer Beschichtung mit dem Kondensationsharz ist.

3. Verfahren nach Anspruch 1 oder 2, **dadurch gekennzeichnet, dass** als Kondensationsharz ein Melamin-Formaldehyd-, ein Harnstoff-Formaldehyd- und/oder ein Phenol-Formaldehyd-Harz oder Mischungen mehrerer dieser Harze eingesetzt wird.

4. Verfahren nach wenigstens einem der vorhergehenden Ansprüche, **dadurch gekennzeichnet, dass** das Kondensationsharz ein Postformingharz ist und/oder mittels wenigstens eines Elastifizierungsmittels derart flexibel eingestellt ist, dass das stabilisierte Furnier nach dem Pressen zu einer Rolle aufgerollt werden kann.

5. Verfahren nach wenigstens einem der vorhergehenden Ansprüche, **dadurch gekennzeichnet, dass** das Kondensationsharz wenigstens ein Additiv aus der Gruppe Härter, Netzmittel, Farbstoff, Pigment, Effektpigment, Flammschutzmittel, Tinte, UV-Stabilisator, Infrarotabsorber, Mittel zur Erhöhung der Leitfähigkeit, antibakterielle Mittel, Hydrophobierungsmittel, Bleichmittel und/oder Beize aufweist.

6. Verfahren nach wenigstens einem der vorhergehenden Ansprüche, **dadurch gekennzeichnet, dass** die Furnierlage eine Stärke zwischen 0,1 mm und 1 mm aufweist.

7. Verfahren nach wenigstens einem der vorhergehenden Ansprüche, **dadurch gekennzeichnet, dass** das Pressen mittels einer Doppelbandpresse erfolgt.

8. Verfahren nach wenigstens einem der vorhergehenden Ansprüche, **dadurch gekennzeichnet, dass** das Pressen bei einer Temperatur zwischen 150°C und 220°C erfolgt.

9. Verfahren nach wenigstens einem der vorhergehenden Ansprüche, **dadurch gekennzeichnet, dass** als Stabilisierungslage ein Pergament, ein Papier, ein Vlies, ein Vulkament oder eine anderweitige Faserlage eingesetzt wird und/oder die Grammatur der Stabilisierungslage zwischen 50 g/m² und 300 g/m² beträgt.

10. Verfahren nach wenigstens einem der vorhergehenden Ansprüche, **dadurch gekennzeichnet, dass** als Stabilisierungslage Vulkanfiber verwendet wird, um einen Bioverbundwerkstoff zu erhalten.

11. Verfahren nach wenigstens einem der vorhergehenden Ansprüche, **dadurch gekennzeichnet, dass** die Beschichtung der Stabilisierungslage mit dem Kondensationsharz vor dem Anordnen der Stabilisierungslage auf der Rückseite der Furnierlage auf eine Restfeuchte von unter 7,5 % getrocknet wird.

12. Verfahren nach wenigstens einem der vorhergehenden Ansprüche, **dadurch gekennzeichnet, dass** beim Pressen ein Strukturgeber, insbesondere zum Erzeugen unterschiedlicher Glanzgrade, und/oder ein Transferpapier zum Übertragen von Drucken auf das Furnier auf der Oberfläche der Furnierlage angeordnet werden.

## Claims

1. Method for manufacturing a stabilized veneer without a carrier board, comprising the steps of:
- providing a stabilization sheet
- one-sided coating of the stabilization sheet with a condensation resin
- arranging the stabilization sheet with the coating on the backside of a veneer layer,
- pressing the stabilization sheet and the veneer layer at a pressure of between 2 MPa and 3 MPa to form a stabilization layer, wherein
- the condensation resin is at least partially pressed out of the stabilization sheet into the veneer layer during pressing, where it supplies mechanical stabilization to the veneer and wherein
- the wood surface on the front side of the stabilized veneer remains unchanged and natural due to the pressing of the condensation resin from the rear side into the veneer layer, so that an unchanged wood surface appearance and feel of the stabilized veneer is achieved.

2. Method according to claim 1, **characterized in that** one side of the stabilization sheet opposite the coated side is free of a coating with the condensation resin.

3. Method according to claim 1 or 2, **characterized in that** a melamine-formaldehyde resin, a urea-formaldehyde resin and/or a phenol-formaldehyde resin or mixtures of several of these resins are used as the condensation resin.

4. Method according to at least one of the preceding claims, **characterized in that** the condensation resin is a postforming resin and/or is adjusted to be flexible by means of at least one elasticizer in such a way that the stabilized veneer can be rolled up into a roll after pressing.

5. Method according to at least one of the preceding claims, **characterized in that** the condensation resin comprises at least one additive selected from the group of hardener, wetting agent, colorant, pigment, effect pigment, flame retardant, ink, UV stabilizer, infrared absorber, agent for increasing conductivity, antibacterial agent, hydrophobizing agent, bleaching agent and/or stain.

6. Method according to at least one of the preceding claims, **characterized in that** the veneer layer has a thickness of between 0.1 mm and 1 mm.

7. Method according to at least one of the preceding claims, **characterized in that** the pressing is carried out by means of a double belt press.

8. Method according to at least one of the preceding claims, **characterized in that** the pressing is carried out at a temperature of between 150°C and 220°C.

9. Method according to at least one of the preceding claims, **characterized in that** a parchment, a paper, a nonwoven, a *Vulkament* or another fibrous layer is used as the stabilization sheet and/or the grammage of the stabilization sheet is between 50 g/m² and 300 g/m².

10. Method according to at least one of the preceding claims, **characterized in that** vulcanized fiber is used as stabilization sheet in order to obtain a biocomposite.

11. Method according to at least one of the preceding claims, **characterized in that** the coating of the stabilization sheet with the condensation resin is dried to a residual moisture of less than 7.5% before the stabilization sheet is arranged on the backside of the veneer layer.

12. Method according to at least one of the preceding claims, **characterized in that** a structuring agent, in particular for producing different gloss levels, and/or a transfer paper for transferring prints to the veneer are arranged on the surface of the veneer layer during pressing.

## Revendications

1. Procédé de fabrication d'un placage stabilisé sans panneau de support, comprenant les étapes suivantes :
- fournir une feuille de stabilisation
- revêtement unilatéral de la feuille de stabilisation avec une résine de condensation
- disposer la feuille de stabilisation avec le revêtement sur la face arrière d'une couche de placage,
- presser la feuille de stabilisation et la couche de placage avec une pression comprise entre 2 MPa et 3 MPa pour former une couche de stabilisation, dans laquelle
- la résine de condensation est au moins partiellement pressée hors de la feuille de stabilisation dans la couche de placage pendant le pressage, où elle fournit une stabilisation mécanique au placage et où
- la surface du bois sur la face avant du placage stabilisé reste inchangée et naturelle en raison de la pression de la résine de condensation de la face arrière dans la couche de placage, ce qui permet d'obtenir un aspect et un toucher inchangés de la surface du bois du placage stabilisé.

2. Procédé selon la revendication 1, **caractérisé par le fait qu'**une face de la feuille de stabilisation opposée à la face enduite est exempte d'une couche de résine de condensation.

3. Procédé selon la revendication 1 ou 2, **caractérisé par** l'utilisation comme résine de condensation d'une résine mélamine-formaldéhyde, d'une résine urée-formaldéhyde et/ou d'une résine phénol-formaldéhyde ou de mélanges de plusieurs de ces résines.

4. Procédé selon l'une au moins des revendications précédentes, **caractérisé en ce que** la résine de condensation est une résine de postformage et/ou est rendue flexible au moyen d'au moins un élastifiant de manière à ce que le placage stabilisé puisse être enroulé en rouleau après pressage.

5. Procédé selon l'une au moins des revendications précédentes, **caractérisé en ce que** la résine de condensation comprend au moins un additif choisi dans le groupe des durcisseurs, des agents mouillants, des colorants, des pigments, des pigments à effets, des retardateurs de flamme, des encres, des stabilisateurs UV, des absorbeurs d'infrarouges, des agents augmentant la conductivité, des agents antibactériens, des agents hydrophobes, des agents de blanchiment et/ou des teintures.

6. Procédé selon l'une au moins des revendications précédentes, **caractérisé par le fait que** la couche de placage a une épaisseur comprise entre 0,1 mm et 1 mm.

7. Procédé selon l'une au moins des revendications précédentes, **caractérisé par le fait que** le pressage est effectué au moyen d'une presse à double bande.

8. Procédé selon l'une au moins des revendications précédentes, **caractérisé en ce que** le pressage est effectué à une température comprise entre 150°C et 220°C.

9. Procédé selon l'une au moins des revendications précédentes, **caractérisé par** l'utilisation d'un parchemin, d'un papier, d'un non-tissé, d'un *Vulkament* ou d'une autre couche fibreuse comme feuille de stabilisation et/ou par le fait que le grammage de la feuille de stabilisation est compris entre 50 g/m² et 300 g/m².

10. Procédé selon l'une au moins des revendications précédentes, **caractérisé par** l'utilisation d'une fibre vulcanisée comme feuille de stabilisation afin d'obtenir un biocomposite.

11. Procédé selon l'une au moins des revendications précédentes, **caractérisé en ce que** le revêtement de la feuille de stabilisation avec la résine de condensation est séché jusqu'à une humidité résiduelle inférieure à 7,5 % avant que la feuille de stabilisation ne soit disposée sur la face arrière de la couche de placage.

12. Procédé selon l'une au moins des revendications précédentes, **caractérisé par le fait qu'**un agent structurant, en particulier pour produire différents niveaux de brillance, et/ou un papier de transfert pour transférer les impressions sur le placage sont disposés sur la surface de la couche de placage pendant le pressage.
